# EUROPEAN PATENT APPLICATION

(11) **EP 2 165 611 A1**
(43) Date of publication of application: **24.03.2010**
(21) Application number: 08763942.3
(22) Date of filing: 29.05.2008
(51) Int. Cl.: A23L 1/22, A23L 1/237

(54) **TASTE IMPROVER**

(30) Priority: 31.05.2007 JP 2007145125; 04.07.2007 JP 2007176770; 13.11.2007 JP 2007294412; 28.12.2007 JP 2007338942
(71) Applicant: Ajinomoto Co., Inc., Tokyo 104-8315 (JP)
(72) Inventor: SATO, Shin, Kawasaki-shi Kanagawa 210-8681 (JP); SATOKAWA, Hideo, Kawasaki-shi Kanagawa 210-8681 (JP); IWASAKI, Takeshi, Kawasaki-shi Kanagawa 210-8681 (JP); TOMIYAMA, Yasuyuki, Kawasaki-shi Kanagawa 210-8681 (JP); ISHII, Kyoko, Kawasaki-shi Kanagawa 210-8681 (JP); SEGURO, Katsuya, Kawasaki-shi Kanagawa 210-8681 (JP)
(74) Representative: Strehl Schübel-Hopf & Partner
(86) International application number: PCT/JP2008/001342
(87) International publication number: WO 2008/146491

(57) **Abstract**

Poly-γ-glutamic acid or a salt thereof is made to be present at the same time as a taste-exhibiting substance formed from a potassium salt.

## Description

### TECHNICAL FIELD

The present invention relates to a taste improver and, in particular, a suppressant for the bitterness or harsh taste of a potassium salt.

### BACKGROUND ART

A potassium salt such as potassium chloride is contained in many types of food and drink. A potassium salt is sometimes actively added to food and drink or a seasoning for a certain purpose. Patent Document 1 states that in a low-salt seasoning, potassium chloride is used as a substitute for sodium chloride.

However, as described in the same document, potassium chloride exhibits a bitter taste. Because of this, in order to maintain the intrinsic taste of the seasoning or the food and drink, the amount thereof added is sometimes restricted.

Although potassium chloride is cited above as one example, in general when a potassium salt is utilized, because of its unique taste the amount thereof added is sometimes restricted.

As techniques for suppressing the taste of a specific taste-exhibiting substance, there are conventional techniques described in Patent Documents 2 and 3.
Patent Document 2 describes the combined use of poly-γ-glutamic acid and a bitter substance such as a peptide, caffeine, a mineral, or a vitamin, which exhibit a bitter taste, thereby suppressing the bitter taste.
Furthermore, Patent Document 3 states that poly-γ-glutamic acid masks the bad taste of calcium or iron.

Moreover, as other techniques for suppressing a bitter taste, there are those described in Patent Documents 4 and 5.
Patent Document 4 states that an L-aspartic acid- or L-glutamic acid-containing peptide having not greater than 10 constituent amino acids, such as L-glutamyl-L-glutamic acid, eliminates the bitter taste of food having a bitter taste.
Furthermore, Patent Document 5 describes a method for removing the bitter taste from potassium chloride by using in combination therewith a magnesium salt or a calcium salt of an organic acid, such as magnesium glutamate or calcium glutamate.

[Patent Document 1] Japanese Patent Laid-open No.H5-328937
[Patent Document 2] International Publication Pamphlet No.00/21390
[Patent Document 3] Japanese Patent Laid-open No.H5-316999
[Patent Document 4] Japanese Patent Laid-open No.S50-121449
[Patent Document 5] Japanese Patent Laid-open No.H4-108358
[Patent Document 6] Japanese Patent Laid-open No.2000-233923
[Patent Document 7] Japanese Patent Laid-open No.H6-24738
[Non-Patent Document 1] The Salt Industry Center of Japan, 'Shio Shiken Houhou (Salt Test Method) 3rd Edition', January 1, 2007, p. 96-97.

### DISCLOSURE OF THE INVENTION

However, none of the above-mentioned techniques described in Patent Documents 1 to 4 have been accomplished from the viewpoint of improving the taste of a potassium salt.
Furthermore, even by use of the technique described in Patent Document 5, there is still room for improvement from the viewpoint of improving the taste of a potassium salt in a stable manner.

According to the present invention, there is provided a taste improver for a taste-exhibiting substance formed from a potassium salt, the taste improver containing poly-γ-glutamic acid or a salt thereof.
Furthermore, according to the present invention, there is provided a seasoning that contains the taste improver of the present invention and a taste-exhibiting substance formed from a potassium salt.
Moreover, according to the present invention, there is provided food or drink that contains the taste improver of the present invention and a taste-exhibiting substance formed from a potassium salt.
Furthermore, according to the present invention, there is provided a method for improving the taste of a potassium salt, the method including making a taste-exhibiting substance containing a potassium salt and poly-γ-glutamic acid or a salt thereof be present at the same time.
Moreover, according to the present invention, there is provided a composition that contains poly-γ-glutamic acid or a salt thereof, a taste-exhibiting substance formed from a potassium salt, and sodium chloride
the taste-exhibiting substance containing potassium chloride,
the proportion of the potassium chloride relative to the entire composition being equal to or greater than 40 wt % but not greater than 60 wt %, and
the proportion of the sodium chloride relative to the entire composition being equal to or greater than 40 wt % but not greater than 60 wt %.

In the present invention, poly-γ-glutamic acid (hereinafter, also called γ-PGA) indicates a polymer compound in which the constituent amino acid is glutamic acid, and it is peptide-bonded via a γ-position carboxy group.

According to the present invention, by making poly-γ-glutamic acid or a salt thereof coexist with a potassium salt, which is a taste-exhibiting substance, when eating or drinking, it is possible to suppress the unique taste of the potassium salt. The potassium salt unique taste referred to here is specifically a bitter taste, a harsh taste, and so on.

In addition, any combination of these constituents, or one in which an expression of the present invention is converted between a method, a device, and so on is also effective as a mode of the present invention.

For example, according to the present invention, there is provided a method for producing food or drink, the method including adding a taste improver containing poly-γ-glutamic acid or a salt thereof.
Furthermore, according to the present invention, there is provided a method for producing a seasoning, the method including adding a taste improver containing poly- γ-glutamic acid or a salt thereof.

As hereinbefore described, in accordance with the present invention, by making poly-γ-glutamic acid or a salt thereof be present at the same time, the taste of a taste-exhibiting substance formed from a potassium salt can be improved.

### BRIEF DESCRIPTION OF THE DRAWINGS

The above-mentioned objects, other objects, features, and advantages will become more apparent from preferred embodiments described below and the accompanying drawings below.
[FIG. 1] A diagram showing sensory evaluation results of a potassium chloride aqueous solution in an Example.
[FIG. 2] A diagram showing sensory evaluation results of a potassium chloride aqueous solution in an Example.
[FIG. 3] A diagram showing sensory evaluation results of a potassium chloride aqueous solution in an Example.
[FIG. 4] A diagram showing sensory evaluation results of a potassium chloride aqueous solution in an Example.

### BEST MODE FOR CARRYING OUT THE INVENTION

### (First embodiment)

The taste improver in the present embodiment improves the taste of a taste-exhibiting substance formed from a potassium salt, and contains poly-γ-glutamic acid or a salt thereof. The form of the taste improver is not particularly limited; examples thereof include a powder, granules, a tablet, a liquid, and a gel, and more specifically it is a powder form or a granular form.

The taste-exhibiting substance is not particularly limited as long as it is formed from a potassium salt and is suitable for eating, and may be either an inorganic acid salt or an organic acid salt. Examples thereof include potassium chloride, potassium acetate, potassium propionate, potassium nitrate, potassium carbonate, potassium bicarbonate, potassium sulfate, potassium tartarate, potassium hydrogen tartarate, potassium sorbate, potassium phosphate, dipotassium hydrogen phosphate, potassium dihydrogen phosphate, potassium citrate, dipotassium hydrogen citrate, and potassium dihydrogen citrate. Other examples of the taste-exhibiting substance include a potassium salt of an acidic amino acid, such as potassium glutamate. The number of potassium ions in the taste-exhibiting substance is not particularly limited, and it may be monovalent or di- or higher-valent.
Furthermore, the taste-exhibiting substance may be a solid such as a crystal form, a powder form, or a particulate form, or may be dissolved in a liquid.

The taste improver may be used for one type of potassium salt or two or more types of potassium salts.
Furthermore, one type of potassium salt, which is the taste-exhibiting substance, may be contained in food and drink or a seasoning, which are described later, or a plurality of types thereof may be contained therein.

As the γ-PGA used in the present embodiment, for example, γ-PGA in the mucilage of natto may be extracted and used, or γ-PGA extracellularly secreted from bacterial cells of a Bacillus genus such as Bacillus subtilis natto may be used. It may contain, without any problems, levan in the natto mucilage or secreted at the same time by Bacillus subtilis natto. Furthermore, in order to obtain γ-PGA having a predetermined molecular weight, there are a method in which γ-PGA having a larger molecular weight than said molecular weight is treated with an acid or with a special enzyme that is not present in the intestine and can break the γ bond to thus reduce the molecular weight, and a method in which γ-PGA having said molecular weight is secreted by culturing Bacillus subtilis natto, and so on, and γ-PGA obtained by either thereof may be used to the same effect.

γ-PGA is generally obtained as a sodium salt, but it may be in the form of another metal salt such as a potassium salt, a calcium salt, or a magnesium salt, or free polyglutamic acid.

In the present embodiment, from the viewpoint of exhibiting an effect in improving taste more effectively the weight-average molecular weight of γ-PGA is preferably for example equal to or greater than 3 x 10³, more preferably equal to or greater than 5 x 10³, and yet more preferably equal to or greater than 1 x 10⁴.
Furthermore, the weight-average molecular weight of γ-PGA is preferably for example not greater than 3 x 10⁶, more preferably not greater than 1 x 10⁶, and yet more preferably not greater than 1 x 10⁵.
The weight-average molecular weight of γ-PGA is measured by, for example, a light scattering method. In this process, for example, the measurement wavelength is 633 nm, and the dn/dc (refractive index concentration increment, solvent 100 mM Tris + 0.3 M NaCl (pH 8.6)) at this wavelength is 0.191.

In the present embodiment, from the viewpoint of exhibiting an effect in improving taste stably the formulation is such that the proportion of poly-γ-glutamic acid relative to the taste-exhibiting substance is, for example, equal to or greater than 0.0001 as a ratio by weight. Furthermore, from the viewpoint of exhibiting an effect in improving taste more effectively the formulation is such that the proportion of poly-γ-glutamic acid relative to the taste-exhibiting substance is, for example, equal to or greater than 0.0004 as a ratio by weight, and preferably equal to or greater than 0.001. By the use of γ-PGA, even when the proportion added relative to a potassium salt, which is a taste-exhibiting substance, is small as described above, an effect in improving taste can be exhibited effectively.
The upper limit of the proportion of poly-γ-glutamic acid relative to the taste-exhibiting substance is not particularly limited, and it is adjusted according to the taste of food or drink to which the taste improver is added. As a specific example, in food or drink having a relatively weak taste such as a Japanese broth soup, from the viewpoint of maintaining the intrinsic taste more reliably it is for example not greater than 0.2, preferably not greater than 0.1, and yet more preferably less than 0.04.

Specifically, the taste improver of the present embodiment is used as a taste suppressant for a potassium salt and, more specifically, it is used as a masking agent for the bitter taste, harsh taste, astringent taste, and so on of a potassium salt. Furthermore, it may be used as an umami-enhancing agent when a potassium salt is a substance exhibiting umami.
Furthermore, since the taste improver of the present embodiment masks the bitter taste, harsh taste, astringent taste, and so on of a potassium salt, it is suitably used in a seasoning and so on containing a potassium salt as a taste-exhibiting substance. Moreover, the seasoning of the present embodiment contains γ-PGA or a salt thereof, and a taste-exhibiting substance formed from a potassium salt. The form of the seasoning is not particularly limited, and it may be, for example, a powder form, a particulate form such as a granular form, a tablet, a liquid, or a gel form.

Specific examples of the seasoning include,
table salt;
an umami seasoning;
mirin (sweet cooking rice wine);
rice wine;
a fermented seasoning such as soy sauce or soybean paste;
ketchup;
mayonnaise;
a dressing such as French dressing;
a sauce;
a hot-tasting seasoning such as chili oil;
a tsuyu (dip) such as noodle dip;
ponzu (sauce containing soy sauce and vinegar or citrus juice);
a stock such as a powdered stock;
a consomme such as a solid consomme or a liquid consomme; and
another mixed seasoning such as yuzu pepper or Sichuan pepper salt.

More specifically, the seasoning of the present embodiment contains potassium chloride as the potassium salt. Yet more specifically, it contains potassium chloride as the potassium salt, and sodium chloride. Such a seasoning is suitably used as a so-called low-salt seasoning.

Furthermore, when the seasoning contains potassium chloride as the taste-exhibiting substance and further contains sodium chloride, from the viewpoint of exhibiting an effect in improving the taste of the potassium salt more effectively the proportions by weight of potassium chloride and sodium chloride are preferably at the same level.

Furthermore, the seasoning of the present embodiment may contain as the potassium salt a substance exhibiting umami, such as potassium glutamate. By making γ-PGA and a potassium salt exhibiting umami be present at the same time, in addition to masking the bitter taste, harsh taste, astringent taste, and so on of the potassium salt, the umami can be further enhanced.

Furthermore, the seasoning of the present embodiment may contain as the potassium salt potassium glutamate and potassium chloride, and may further contain sodium chloride.

Moreover, from the viewpoint of exhibiting an effect in improving the taste of a potassium salt more effectively the proportion of γ-PGA relative to the entire seasoning is, for example, equal to or greater than 0.0002 wt %, and preferably equal to or greater than 0.0005 wt %.
Furthermore, from the viewpoint of more reliably suppressing an increase in acid taste of food or drink to which the seasoning is added the proportion of γ-PGA relative to the entire seasoning is, for example, not greater than 5 wt %, preferably not greater than 1 wt %, and more preferably not greater than 0.5 wt %, but depending on the form of the food, the acid taste may be suppressed by means of a pH-adjusting agent and so on.

In addition, the proportion of the potassium salt relative to the entire seasoning is not particularly limited; it is set appropriately according to the type of seasoning, and is, for example, equal to or greater than 0.1 wt % but not greater than 95 wt %.

Furthermore, when the seasoning contains γ-PGA, potassium chloride, and sodium chloride, the components may be added at the proportions below.
γ-PGA: equal to or greater than 0.0002 wt % but not greater than 5 wt %
Potassium chloride: equal to or greater than 10 wt % but not greater than 90 wt %
Sodium chloride: equal to or greater than 9 wt % but not greater than 89.9998 wt %

Moreover, when the seasoning is a composition containing γ-PGA, potassium chloride, and sodium chloride, from the viewpoint of exhibiting an effect in improving the taste of the potassium salt more effectively the components are preferably formulated at the proportions below.
γ-PGA: equal to or greater than 0.0002 wt % but not greater than 5 wt %
Potassium chloride: equal to or greater than 40 wt % but not greater than 60 wt %
Sodium chloride: equal to or greater than 40 wt % but not greater than 60 wt %

Furthermore, when the seasoning is a composition containing γ-PGA and potassium glutamate, from the viewpoint of improving the taste of the potassium salt and exhibiting an effect in enhancing umami more effectively the components are formulated at the proportions below.
γ-PGA: equal to or greater than 0.01 wt % but not greater than 2 wt %
Potassium glutamate: equal to or greater than 98 wt % but not greater than 99.99 wt %

The taste improver or the seasoning of the present embodiment is used in various types of food and drink, including cooked food. The form of the food and drink of the present embodiment is not particularly limited as long as it contains a potassium salt and γ-PGA or a salt thereof.
Specific examples of the food and drink include soup and Japanese style soup such as Japanese broth soap, soybean paste soup (miso soup), and consomme soup;
processed rice food such as rice, rice gruel, rice balls, and curry rice;
stewed food;
pickled food and soaked or dressed vegetables;
pasta and other noodles such as soba, udon, egg noodles (ramen), and spaghetti;
grilled or stir-fried food such as grilled meat, steak, grilled chicken, grilled fish, grilled vegetables, and stir-fried vegetables; and
processed egg food such as boiled egg, fried egg, and tamagoyaki (rolled egg).

From the viewpoint of exhibiting an effect in improving the taste of a potassium salt more effectively the proportion of γ-PGA relative to the entire food and drink is, for example, equal to or greater than 0.0002 wt %, and preferably equal to or greater than 0.0005 wt %.
Furthermore, from the viewpoint of more reliably suppressing an increase in acid taste of food and drink to which the seasoning is added the proportion of γ-PGA relative to the entire food and drink is, for example, not greater than 1 wt %, and preferably not greater than 0.5 wt %, but depending on the form of the food the acid taste may be suppressed by means of a pH-adjusting agent and so on.

In addition, the proportion of the taste-exhibiting substance formed from a potassium salt relative to the entire food and drink is not particularly limited; it is set appropriately according to the type of food and drink, but is for example equal to or greater than 0.1 wt % but not greater than 50 wt %.

Furthermore, the taste improver is made to be present in the mouth at the same time as a potassium salt as a taste improvement target and can thereby suppress a taste that is characteristic of a potassium salt such as a bitter taste or a harsh taste. Therefore, the taste improver may be consumed together with a potassium salt, and the timing of addition thereof is not particularly limited. For example, the taste improver may be added directly or as a seasoning to food or drink in a production process for food or drink, or it may be added after the production process at the dining table and so on before being consumed.

Furthermore, when a potassium salt as a taste improvement target is a substance that exhibits umami, such as potassium glutamate, an undesirable taste such as the bitter taste of the potassium salt can be suppressed, and the umami can be further enhanced. The reason therefor is not entirely clear, but it is surmised that, for example, when γ-PGA is not present at the same time, the bitter taste and so on is relatively strong, and the umami that the potassium salt intrinsically has cannot be sensed, whereas by making γ-PGA be present at the same time, the bitter taste is masked, and the umami that the potassium salt intrinsically has can be sensed more strongly.

In the present embodiment, the taste improver, the seasoning, or the food and drink may further contain various types of minerals other than a potassium salt. The minerals that can be targeted include some or all of the biologically essential minerals such as calcium, iron, magnesium, zinc, copper, and selenium. Furthermore, the form of mineral used is not limited, and in the case of calcium examples that can be targeted include chemically synthesized food additives such as calcium chloride, calcium citrate, calcium glycerophosphate, calcium gluconate, calcium hydroxide, calcium carbonate, calcium lactate, calcium pantothenate, calcium dihydrogen pyrophosphate, calcium sulfate, tricalcium phosphate, calcium monohydrogen phosphate, and calcium dihydrogen phosphate, and natural calcium such as shell calcium and bone calcium. In the case of iron, examples that can be targeted include chemically synthesized food additives such as ferric chloride, sodium ferrous citrate, iron citrate, iron ammonium citrate, ferrous gluconate, iron lactate, ferrous pyrophosphate, ferric pyrophosphate, and ferrous sulfate, and natural iron such as heme iron.

Furthermore, from the viewpoint of efficiently ingesting minerals the total concentration of the minerals relative to the entire food and drink is, for example, equal to or greater than 0.01 wt %, preferably equal to or greater than 0.1 wt %, and more preferably equal to or greater than 0.5 wt %. However, with regard to food and drink, a mineral is not essential from the viewpoint of improving the taste of a potassium salt, and the effects of the present embodiment can be obtained without minerals.

Furthermore, in the present embodiment, it has been found that by adding a trace amount of an umami material, the bitterness of potassium chloride is suppressed without imparting umami.
Examples of the umami material referred to here include fish and shellfish, shiitake mushroom, kelp, vegetables, extracts thereof, and an umami seasoning (sodium glutamate, sodium inosinate, sodium guanylate, sodium ribonucleotide, and so on). The composition of the present embodiment may further contain the umami material above.

### (Second embodiment)

In the present embodiment, a method for preventing caking of a salt and, in particular, a method for preventing caking of a potassium salt is explained.
Among salts, there are those that easily undergo caking due to moisture in the air or in a storage container or moisture contained in themselves, and a method for preventing this has been examined. For example, as techniques for preventing caking of table salt (sodium chloride), there are those described in Patent Documents 6 and 7.
Patent Document 6 describes coating the surface of sodium chloride crystals with trehalose.
Furthermore, Patent Document 7 describes spraying table salt with a disodium hydrogen phosphate liquid and subsequently adding magnesium carbonate powder when storing table salt.

In the present embodiment, a novel technique for preventing caking of a salt is provided.

According to the present embodiment, there is provided an anti-caking agent containing poly-γ-glutamic acid or a salt thereof.
Furthermore, according to the present embodiment, there is provided a seasoning containing the anti-caking agent according to the above-mentioned present embodiment, and a caking substance formed from a salt.
Moreover, according to the present embodiment, there is provided a method for preventing caking, the method including making a caking substance formed from a salt and poly-γ-glutamic acid or a salt thereof be present at the same time.
Furthermore, according to the present embodiment, there is provided a composition containing poly-γ-glutamic acid or a salt thereof and a caking substance formed from a salt, the caking substance containing potassium chloride and sodium chloride, the proportion of the potassium chloride relative to the entire composition being equal to or greater than 40 wt % but not greater than 60 wt %, and the proportion of the sodium chloride relative to the entire composition being equal to or greater than 40 wt % but not greater than 60 wt %.

In the present embodiment, poly-γ-glutamic acid (hereinafter, also called γ-PGA) is a polymer compound in which the constituent amino acid is glutamic acid.

In accordance with the present embodiment, by making a caking substance formed from a salt and γ-PGA be present at the same time, caking of the salt can be suppressed effectively. The reason therefor is not entirely clear, but it is surmised that since γ-PGA absorbs moisture more easily than does a salt, the progress of caking of a salt due to moisture absorption and drying thereof is suppressed.

In addition, any combination of these constituents, and one in which an expression of the present embodiment is converted between a method, a device, and so on is also effective as a mode of the present embodiment.

For example, according to the present embodiment, there is provided a method for producing food or drink, the method including adding an anti-caking agent containing poly-γ-glutamic acid or a salt thereof.
Furthermore, according to the present embodiment, there is provided food or drink containing the anti-caking agent of the above-mentioned present embodiment, and a caking substance formed from a salt.
Moreover, according to the present embodiment, there is provided food or drink containing the seasoning of the above-mentioned present embodiment.
Furthermore, according to the present embodiment, there is provided the use of poly-γ-glutamic acid or a salt thereof as an anti-caking agent.

As hereinbefore described, in accordance with the present embodiment, by the use of poly-γ-glutamic acid or a salt thereof, caking of a caking substance formed from a salt can be prevented effectively.

The anti-caking agent of the present embodiment contains γ-PGA or a salt thereof. Specifically, this anti-caking agent mainly contains a sodium salt of γ-PGA (for example, equal to or greater than 50 wt %). The form of the anti-caking agent is not particularly limited; examples thereof include a powder, granules, a tablet, a liquid, and a gel, and specific examples thereof include a powder form and a granular form.

In the present embodiment, from the viewpoint of preventing caking of a salt more stably the weight-average molecular weight of γ-PGA is for example preferably equal to or greater than 3,000, more preferably equal to or greater than 5,000, and yet more preferably equal to or greater than 10,000.
Furthermore, it is confirmed that the effect can be obtained when the weight-average molecular weight of γ-PGA is not greater than 3,000,000, further when it is not greater than 1,000,000, and yet further when it is not greater than 100,000.
The weight-average molecular weight of γ-PGA is measured by, for example, a light scattering method.

As the γ-PGA used in the present embodiment, γ-PGA in the mucilage of natto may be extracted and used, or γ-PGA extracellularly secreted from bacterial cells of a Bacillus genus such as Bacillus subtilis natto may be used. It may contain, without any problems, levan in the natto mucilage or secreted at the same time by Bacillus subtilis natto. Furthermore, in order to obtain γ-PGA having a predetermined molecular weight, there are a method in which γ-PGA having a larger molecular weight than said molecular weight is treated with an acid or with a special enzyme that is not present in the intestine and can break the γ bond to thus reduce the molecular weight, and a method in which γ-PGA having said molecular weight is secreted by culturing Bacillus subtilis natto and so on, and γ-PGA obtained by either thereof may be used to the same effect.

γ-PGA is generally obtained as a sodium salt, but it may be another metal salt such as a potassium salt, a calcium salt, or a magnesium salt, or free polyglutamic acid.

The caking substance of the present embodiment is used with, for example, a caking substance formed from a caking or deliquescent salt. The caking substance may be either an inorganic acid salt or an organic acid salt. Examples of the caking substance include salts such as a potassium salt such as potassium chloride, potassium hydroxide, potassium glutamate, potassium inosinate, potassium guanylate, or tripotassium citrate; a sodium salt such as sodium chloride, sodium hydroxide, sodium glutamate, sodium inosinate, sodium guanylate, or sodium citrate; a calcium salt such as calcium chloride, calcium lactate, calcium glutamate, calcium inosinate, or calcium guanylate; and a magnesium salt such as magnesium chloride. The caking substance may be formed from one type of salt, or two or more types of salts may be contained. Furthermore, the anti-caking agent in the present embodiment may be used for one type of salt or a mixture of two or more types of salts.
Specific examples of the salt include a potassium salt and a sodium salt, and more specific examples thereof include potassium chloride, sodium chloride, and a mixture thereof.

Moreover, a specific form of the caking substance is a solid such as a crystal form, a powder form, or a particulate form. When the anti-caking agent of the present embodiment is added to a salt in a crystal form, its anti-caking effect is particularly excellent.

In the present embodiment, from the viewpoint of exhibiting an anti-caking effect more effectively γ-PGA is formulated so that the proportion of γ-PGA relative to the total of the caking substance and γ-PGA is for example equal to or greater than 0.05 wt %, preferably equal to or greater than 0.1 wt %, and more preferably equal to or greater than 0.2 wt %.
Furthermore, from the viewpoint of exhibiting an anti-caking effect more stably γ-PGA is formulated so that the proportion of γ-PGA relative to the total of the caking substance and γ-PGA is for example less than 0.8 wt %, preferably not greater than 0.6 wt %, and more preferably not greater than 0.4 wt %.

Since the anti-caking agent of the present embodiment has the function of suppressing caking of a salt, it is suitably used in a seasoning and so on containing a salt as a caking substance. Moreover, the seasoning of the present embodiment contains γ-PGA or a salt thereof, and a caking substance formed from a salt. The form of the seasoning is for example a powder form, a particulate form such as a granular form, or a tablet. The caking substance in the seasoning is for example in a crystal form.

With regard to the anti-caking agent of the present embodiment, by making it be present at the same time as a salt as a caking prevention target, caking of the salt can be prevented. Accordingly, the timing of adding it to the seasoning is not particularly limited. For example, the anti-caking agent may be added during a production process for the seasoning, or the anti-caking agent may be added to a seasoning obtained after production.

More specifically, the anti-caking agent in a powder form may be mixed with the caking substance.
Furthermore, the surface of the caking substance may be covered with the anti-caking agent. A covering method is not particularly limited and, for example, the surface of a caking substance powder may be coated with γ-PGA by adding a solution of the anti-caking agent (for example, an aqueous solution) to the caking substance, mixing, and then drying. As a method for adding an anti-caking agent, there can be cited for example a coating method such as spray coating or a dropwise addition method. Furthermore, as a method for drying a mixture, there can be cited for example hot air drying.

The surface of the caking substance may be covered in layer form with γ-PGA. The thickness of the covering layer is adjusted according to the proportions of γ-PGA and the caking substance, the particle size or specific surface area of the caking substance, and so on, and may be any thickness as long as an anti-caking effect can be obtained at a level that causes no problem in practice. Furthermore, the covering layer may cover the entire surface of the caking substance powder or part of the surface as long as an anti-caking effect can be obtained at a level that causes no problem in practice.

By forming a covering layer of the anti-caking agent on the surface of the caking substance, since γ-PGA can be present more uniformly on the outside of the caking substance and localization of γ-PGA in the seasoning can be suppressed, caking of a salt can be prevented more effectively. This operational effect is exhibited markedly when the caking substance is crystals of a salt and the crystals are covered with γ-PGA.

Specific examples of the seasoning include table salt and various types of mixed seasonings. The seasoning contains the above-mentioned salt as a caking substance. More specifically, the seasoning contains potassium chloride as a caking substance. The seasoning may contain as the caking substance a potassium salt and a sodium salt and, more specifically, it contains potassium chloride and sodium chloride. Such a seasoning is suitably used as a so-called low-salt seasoning, in which table salt is partially replaced by potassium chloride.

Furthermore, when the caking substance contains potassium chloride and sodium chloride, from the viewpoint of exhibiting an anti-caking effect more effectively the ratios by weight of potassium chloride and sodium chloride are preferably at the same level, and specifically it is preferable that the proportion of potassium chloride relative to the entire composition containing γ-PGA and the caking substance is equal to or greater than 40 wt % but not greater than 60 wt %, and the proportion of sodium chloride relative to the entire composition is equal to or greater than 40 wt % but not greater than 60 wt %.

From the viewpoint of exhibiting an anti-caking effect of the seasoning more effectively, γ-PGA is formulated so that the proportion of γ-PGA relative to the entire seasoning is for example equal to or greater than 0.05 wt %, preferably equal to or greater than 0.1 wt %, and more preferably equal to or greater than 0.2 wt %.
Furthermore, from the viewpoint of exhibiting an anti-caking effect of the seasoning more stably, γ-PGA is formulated so that the proportion of γ-PGA relative to the entire seasoning is for example less than 0.8 wt %, preferably not greater than 0.6 wt %, and more preferably not greater than 0.4 wt %.

The proportion of the caking substance relative to the entire seasoning is not particularly limited; it is set appropriately according to the type of seasoning, and is for example equal to or greater than 0.1 wt % but not greater than 99.99 wt %.

Furthermore, when the seasoning contains γ-PGA, potassium chloride, and sodium chloride, the components may be added for example at the proportions below.
γ-PGA: equal to or greater than 0.05 wt % but not greater than 0.8 wt %
Potassium chloride: equal to or greater than 0.5 wt % but not greater than 90 wt %
Sodium chloride: equal to or greater than 9.2 wt % but not greater than 99.45 wt %

Furthermore, when the seasoning is a composition containing γ-PGA, potassium chloride, and sodium chloride, from the viewpoint of exhibiting an anti-caking effect more effectively the components are preferably added at the proportions below.
γ-PGA: equal to or greater than 0.05 wt % but not greater than 0.8 wt %
Potassium chloride: equal to or greater than 40 wt % but not greater than 60 wt %
Sodium chloride: equal to or greater than 40 wt % but not greater than 60 wt %

Since the seasoning of the present embodiment contains γ-PGA, when for example it is a state of being contained in a sealed container and shielded from outside air or in a state of being in contact with outside air, moisture absorption and caking due to moisture in the container or the outside air is suppressed effectively. Furthermore, since a small amount of moisture is usually contained in the seasoning, if a load is applied to the seasoning, caking might be promoted. In accordance with the present embodiment, for example, such caking due to a load (hereinafter, also called 'caking under load') can be suppressed.

In addition, the anti-caking agent of the present embodiment may be used in a combination with another known anti-caking substance. Furthermore, the seasoning of the present embodiment may contain, in addition to the anti-caking agent of the present embodiment, another known anti-caking substance. In accordance with combined use of the anti-caking agent of the present embodiment and another anti-caking substance, caking of a caking salt can be suppressed more stably. Specific examples of said other anti-caking substances include carbonates such as magnesium carbonate and calcium carbonate; phosphates such as tricalcium phosphate and anhydrous sodium phosphate;
ammonium citrate; and
magnesium sulfate.

Furthermore, in the present embodiment, the seasoning is used in various types of food and drink including cooked food. Specific examples of the food and drink include soup and Japanese style soup such as Japanese broth soap, soybean paste soup (miso soup), and consomme soup;
processed rice food such as rice, rice gruel, and rice balls;
stewed food;
pickled food and soaked or dressed vegetables;
pasta and other noodles such as soba, udon, egg noodles (ramen), and spaghetti;
grilled or stir-fried food such as grilled meat, steak, grilled chicken, grilled fish, grilled vegetables, and stir-fried vegetables;
processed egg food such as boiled egg, fried egg, and tamagoyaki (rolled egg); and
salads such as boiled vegetables and raw vegetables.

Since the γ-PGA used in the present embodiment is readily soluble in water, when it is added to food or drink cloudiness can be suppressed compared with a conventional anti-caking substance such as tricalcium phosphate. Moreover, since the γ-PGA used in the present embodiment can suppress the bitter taste and the harsh taste characteristic of a potassium salt, when it is used in food or drink containing a potassium salt the taste can be further improved.

Furthermore, the anti-caking agent or the seasoning of the present embodiment may contain various types of caking or non-caking minerals. The minerals as a target include some or all of the biologically essential minerals such as calcium, iron, magnesium, zinc, copper, and selenium. Furthermore, the form of mineral used is not limited, and in the case of calcium the target includes chemically synthesized food additives such as calcium chloride, calcium citrate, calcium glycerophosphate, calcium gluconate, calcium hydroxide, calcium carbonate, calcium lactate, calcium pantothenate, calcium dihydrogen pyrophosphate, calcium sulfate, tricalcium phosphate, calcium monohydrogen phosphate, and calcium dihydrogen phosphate, and natural calcium such as shell calcium and bone calcium. In the case of iron, the target includes chemically synthesized food additives such as ferric chloride, sodium ferrous citrate, iron citrate, iron ammonium citrate, ferrous gluconate, iron lactate, ferrous pyrophosphate, ferric pyrophosphate, and ferrous sulfate, and natural iron such as heme iron.

Furthermore, from the viewpoint of efficiently ingesting minerals the total concentration of the minerals relative to the entire food and drink is, for example, equal to or greater than 0.01 wt %, preferably equal to or greater than 0.1 wt %, and more preferably equal to or greater than 0.5 wt %.

A case in which the anti-caking agent of the present embodiment is for use as a food such as a seasoning is explained above, but the anti-caking agent of the present embodiment can be used in a substance other than one for use as a food.

The present invention is explained above by reference to embodiments. They are only for illustration purposes, and a person skilled in the art will understand that various modification examples are possible, and such modification examples are also included in the scope of the present invention.

The present invention also includes the modes below.
[1] An anti-caking agent containing poly-γ-glutamic acid or a salt thereof.
[2] The anti-caking agent as set forth in [1], wherein the anti-caking agent is an anti-caking agent for a caking substance formed from a salt.
[3] The anti-caking agent as set forth in [2], wherein the caking substance is a potassium salt or a sodium salt.
[4] The anti-caking agent as set forth in [2] or [3], wherein the caking substance is crystals of the salt.
[5] A seasoning containing the anti-caking agent as set forth in any one of [1] to [4], and a caking substance formed from a salt.
[6] The seasoning as set forth in [5], wherein it is a powder form or a particulate form.
[7] The seasoning as set forth in [5] or [6], wherein it contains crystals of the salt, and the crystals are covered with the poly-γ-glutamic acid.
[8] The seasoning as set forth in any one of [5] to [7], wherein the proportion of the poly-γ-glutamic acid relative to the entire seasoning is equal to or greater than 0.05 wt % but less than 0.8 wt %.
[9] The seasoning as set forth in any one of [5] to [8], wherein the caking substance contains potassium chloride and sodium chloride.
[10] A composition containing poly-γ-glutamic acid or a salt thereof, and a caking substance formed from a salt,
   the caking substance containing potassium chloride and sodium chloride,
   the proportion of the potassium chloride relative to the entire composition being equal to or greater than 40 wt % but not greater than 60 wt %, and
   the proportion of the sodium chloride relative to the entire composition being equal to or greater than 40 wt % but not greater than 60 wt %.
[11] A method for preventing caking, the method including making a caking substance formed from a salt and poly-γ-glutamic acid or a salt thereof be present at the same time.
[12] The method for preventing caking as set forth in [11], wherein the caking substance is a potassium salt or a sodium salt.

### [Examples]

In the examples below, as γ-PGA, Caltake (registered trademark) manufactured by Ajinomoto Co., Inc. was used. The molecular weight of the γ-PGA used was on the order of 30,000.

### (Example 1)

In this example, the effect of adding γ-PGA toward the bitter taste and the harsh taste of potassium chloride (KCl) was evaluated.

Samples were prepared by adding γ-PGA to 0.5 wt % KCl aqueous solutions so that the γ-PGA concentration was 0, 0.0002, 0.0005, 0.002, 0.005, 0.02, and 0.05 wt %. Table 1 shows the KCl concentration, γ-PGA concentration, γ-PGA/Kl concentration ratio, and pH of each sample. In Table 1 and Table 2, which is shown later, the units '%' for concentration are wt %.

Furthermore, by adding KOH to sample No. A2 to A7 solutions in Table 1, the pH thereof was made the same as that of sample No. A1 solution, to which no γ-PGA was added. These are defined as sample Nos. A8 to A13 as shown in Table 2.

[Table 1]

**Table 1**

| Sample No. | A1 | A2 | A3 | A4 | A5 | A6 | A7 |
|---|---|---|---|---|---|---|---|
| KCl concentration (%) | 0.5 | 0.5 | 0.5 | 0.5 | 0.5 | 0.5 | 0.5 |
| γ-PGA concentration (%) | 0 | 0.0002 | 0.0005 | 0.002 | 0.005 | 0.02 | 0.05 |
| Reference: γ-PGA concentration (ratio to KCl concentration) | - | 0.0004 | 0.001 | 0.004 | 0.01 | 0.04 | 0.1 |
| pH | 5.72 | 5.45 | 5.20 | 4.82 | 4.63 | 4.47 | 4.43 |

[Table 2]

**Table 2**

| Sample No. | A1 | A8 | A9 | A10 | A11 | A12 | A13 |
|---|---|---|---|---|---|---|---|
| KCl concentration | 0.5 | 0.5 | 0.5 | 0.5 | 0.5 | 0.5 | 0.5 |
| γ-PGA (%) concentration (%) | 0 | 0.0002 | 0.0005 | 0.002 | 0.005 | 0.02 | 0.05 |
| Reference: γ-PGA concentration (ratio to KCl concentration) | 0 | 0.0004 | 0.001 | 0.004 | 0.01 | 0.04 | 0.1 |
| pH | 5.72 | 5.72 | 5.72 | 5.72 | 5.72 | 5.72 | 5.72 |

The intensity of the harsh taste and the bitter taste of sample Nos. A1 to A13 was compared using sensory evaluation by seven expert evaluation panelists.
The evaluation score was defined as shown in Table 3 as being from 0 (not sensed) to 3.0 (considerably strongly sensed) in steps of 0.1. Furthermore, each sample was evaluated individually, and the average value of the evaluation scores from the evaluation panelists was determined. The higher the average value, the stronger the taste sensed.

[Table 3]

**Table 3**

| Evaluation | Not sensed | Sensed | Very weakly sensed | Weakly sensed | Rather strongly sensed | Strongly sensed | Considerably strongly sensed |
|---|---|---|---|---|---|---|---|
| Evaluation score | 0 | 0.5 | 1.0 | 1.5 | 2.0 | 2.5 | 3.0 |

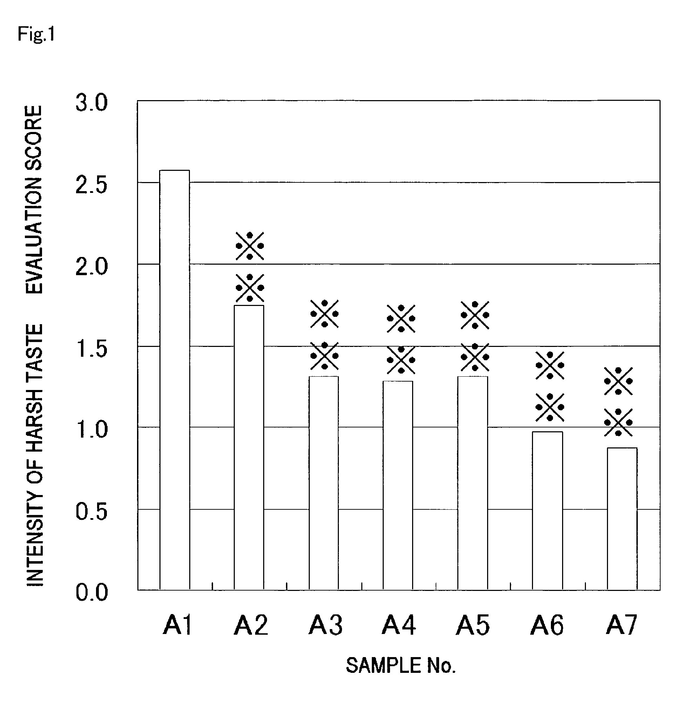

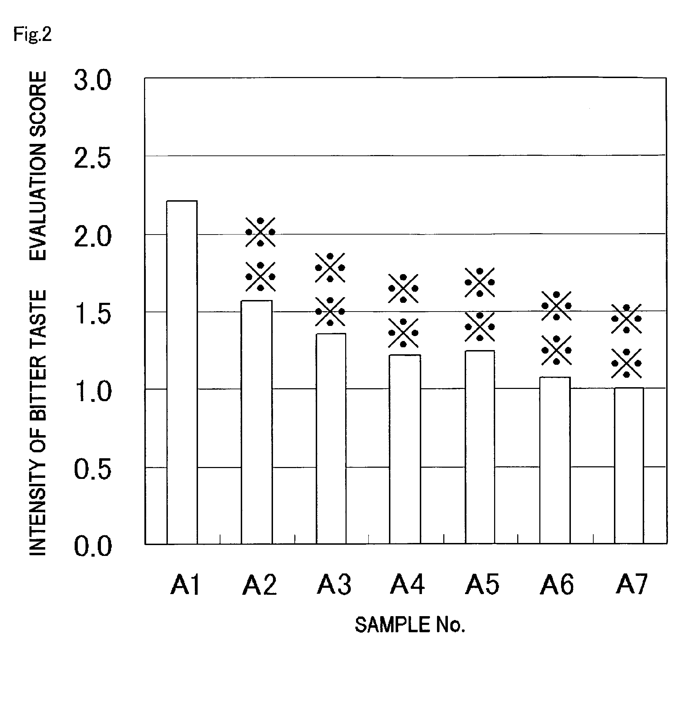

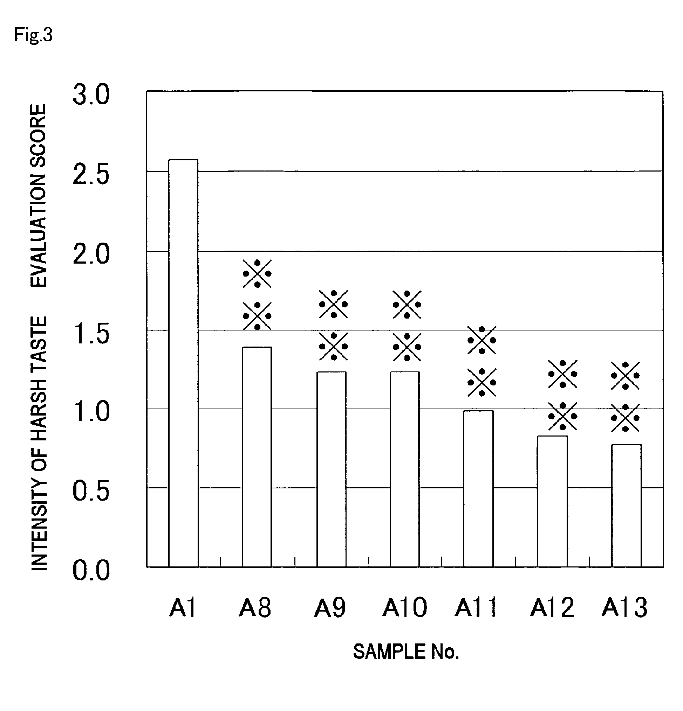

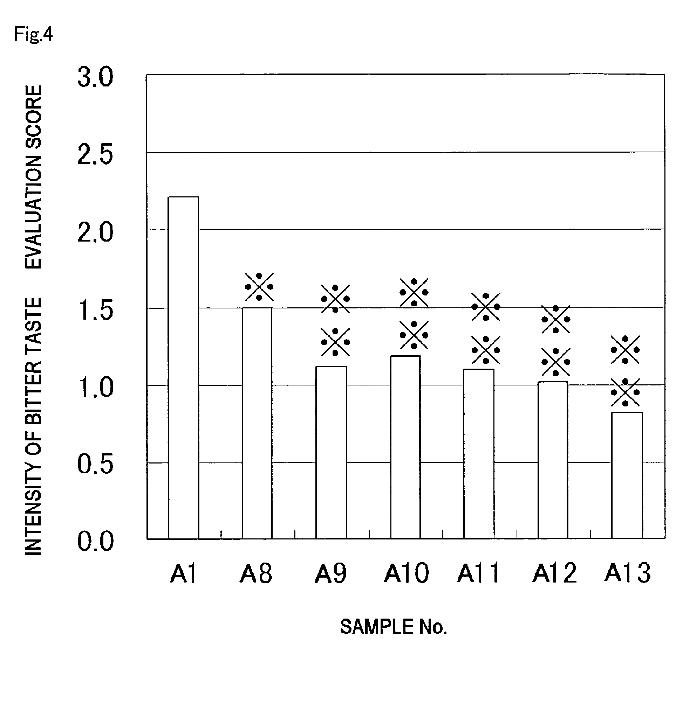

FIG. 1 and FIG. 2 are diagrams showing evaluation results for bitter taste and harsh taste respectively of samples No. A1 to A7. FIG. 3 and FIG. 4 are diagrams showing evaluation results for bitter taste and harsh taste respectively of sample Nos. A1 and A8 to A13.
In FIG. 1 to FIG. 4, ' 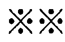 ' indicates that there is a significant difference with a significance level of 1% relative to sample No. A1, and ' 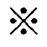 ' indicates that there is a significant difference with a significance level of 5% relative to sample No. A1.

From FIG. 1 to FIG. 4, it is confirmed that adding γ-PGA at a ratio of at least 0.0004 to KCl enabled the harsh taste and the bitter taste to be reduced. For both harsh taste and bitter taste, there was a tendency for the effect to be enhanced by increasing the amount of γ-PGA added. This tendency was substantially the same regardless of whether or not the pH of the solution was adjusted.

### (Example 2)

Solutions corresponding to sample Nos. A1 to A13 were prepared using a (0.5 wt % KCl and 0.5 wt % NaCl) aqueous solution instead of the 0.5 wt % KCl aqueous solution used in Example 1, and evaluation was carried out in accordance with Example 1.

From the results, in the case of the (0.5 wt % KCl and 0.5 wt % NaCl) aqueous solution, the same tendency as in Example 1 was observed, and it is confirmed that for samples in which the γ-PGA concentration in the solution was at least 0.0002 wt %, the harsh taste and bitter taste were reduced compared with a solution having no γ-PGA added.

From the examples above, the use of γ-PGA can improve the taste of a potassium salt.
In the examples above, evaluation results of an aqueous solution containing KCl are shown, but in the case of a powder of KCl crystals also, adding γ-PGA reduced the bitter taste and the harsh taste.
Moreover, in the case of a sample containing potassium chloride and sodium chloride at about the same ratio by weight, the use of γ-PGA enables an effect in improving taste to be exhibited more stably.

### (Example 3)

In this example, the effect of adding γ-PGA toward the bitter taste and the harsh taste of potassium glutamate (Monopotassium L-Glutamate: GluK) was evaluated.
GluK and γ-PGA each in a powder form were mixed at different ratios by weight, thus giving powder form samples (Nos. B1 to B8). The formulation of each sample is shown in Table 4.

Sample Nos. B1 to B8 were subjected to sensory evaluation by two or three expert evaluation panelists, and the intensity of the bitter taste and of umami was compared. The evaluation score for intensity of the bitter taste and of umami was from -2.0 (not quite sensed) to 2.0 (strongly sensed) in steps of 1, and the average value of the evaluation scores by the evaluation panelists was determined. The higher this average value, the stronger the taste sensed.

The evaluation results are shown in Table 4. From Table 4, it can be seen that, for a composition containing GluK and γ-PGA, when γ-PGA was added at a concentration of at least 0.01 wt %, compared with a case in which no γ-PGA was added, the bitter taste of GluK was reduced effectively and the umami was enhanced.

[Table 4]

**Table 4**

| Sample No. | B1 | B2 | B3 | B4 | B5 | B6 | B7 | B8 |
|---|---|---|---|---|---|---|---|---|
| γ-PGA | 0 | 0.01 | 0.05 | 0.1 | 0.2 | 0.5 | 1 | 2 |
| GluK | 100 | 99.99 | 99.95 | 99.9 | 99.8 | 99.5 | 99 | 98 |
| Bitter taste | 0 | -0.5 | -0.5 | -0.7 | -1 | -1 | -1.3 | -1.7 |
| Umami | 0 | 1 | 1 | 0.7 | 1.3 | 1 | 1.7 | 1.7 |

In the examples above, γ-PGA having a molecular weight of on the order of 30,000 was used, but when γ-PGA having a molecular weight of on the order of 3,000 is used, an effect in improving the taste of a potassium salt is obtained.

In the examples below also, Caltake (registered trademark) manufactured by Ajinomoto Co., Inc. was used as the γ-PGA. The molecular weight of the γ-PGA used was on the order of 30,000. Furthermore, in the examples below, '%' means 'wt %' unless otherwise specified.

### (Example 4)

In this example, γ-PGA was added to a mixture of potassium chloride (KCl) and sodium chloride (NaCl), and its influence on caking was evaluated.

### (Samples)

γ-PGA was added to a mixture of NaCl:KCl = 50:50 at various concentrations. Specifically, γ-PGA was added so that the proportion of γ-PGA relative to the total of NaCl, KCl, and γ-PGA was 0, 0.1, 0.2, 0.4, and 0.6 wt %, and mixed (sample Nos. 1 to 5).

KCl and NaCl without γ-PGA added were respectively defined as sample Nos. 6 and 7, and an evaluation was carried out.

Magnesium carbonate or tricalcium phosphate was added to a mixture of NaCl:KCl = 50:50. Specifically, magnesium carbonate or tricalcium phosphate was added so that magnesium carbonate or tricalcium phosphate relative to the total of NaCl, KCl, and magnesium carbonate or tricalcium phosphate was 0.4 wt % or 0.8 wt %, and mixed (samples No. 8 to 11).

Furthermore, mixtures of NaCl:KCl = 50:50 were coated with γ-PGA at various concentrations. Specifically, while mixing a mixture of NaCl and KCl, an aqueous solution containing a predetermined amount of γ-PGA was added. After it was confirmed after the addition that the mixture was uniform, it was transferred to a dryer and dried at 85°C for 10 min. With regard to the concentration of γ-PGA added, the proportion of γ-PGA relative to the total of NaCl, KCl, and γ-PGA was 0, 0.05, 0.1, 0.2, 0.4, 0.6, 0.8, and 1 wt % (sample Nos. 12 to 19). For sample No. 12, for which the concentration of γ-PGA added was 0%, the same procedure was carried out except that water was used instead of the aqueous solution of γ-PGA.

### (Evaluation)

Each sample thus obtained was subjected to evaluation of caking properties under load and caking properties due to absorption of moisture by the methods below.
Caking properties under load: about 30 g of a sample was placed in a caking under load test container; after placing a weight corresponding to charging in a 900 kg container, it was stored in a humidity regulated store at 30°C and RH (relative humidity) 34% for 7 days, the state after storage was examined, and the degree of caking was calculated by the method below.
Caking properties due to absorption of moisture: about 10 g of a sample was measured in a weighing bottle, and then stored in a humidity-controlled storage at 24.0°C and RH 54% for 7 days. The state was examined after 3 days and after 7 days, and the degree of caking after 7 days was calculated by the method below.

The state after storage was examined visually and so on and classified as follows for both caking properties under load and caking properties due to absorption of moisture.
Loose: not caked.
Quasi-caked: collapsed by light vibration or by being lightly pushed with a finger.
Caked: did not collapse even by the application of strong vibration.

Furthermore, the degree of caking was calculated in accordance with 'Degree of caking (sieving method)' described in Non-Patent Document 1. Specifically, a sieve having a mesh opening of 2.0 mm was used, 10 g of a sample per measurement was placed on the sieve and sieved, and the weight of the sample remaining on the sieve was measured.

The evaluation results are shown in Table 5 to Table 9. From Table 5 to Table 9, it can be seen that adding γ-PGA improved both the caking properties under load and the caking properties due to absorption of moisture.
Furthermore, in sample Nos. 13 to 19, which were coated with γ-PGA, the visual uniformity of the samples was better than for sample Nos. 2 to 5, which were not coated, and it was surmised that the occurrence of segregation would be suppressed.

[Table 5]

**Table 5**

| Sample No. | Salt | γ-PGA | Additive other than γ-PGA | Initial moisture | Caking properties under load (after 7 days) | |
|---|---|---|---|---|---|---|
| | | | | | State | Degree of caking |
| 1 | KCl+NaCl | 0% | - | 0.07% | Quasi-caked | 23.3% |
| 2 | KCl+NaCl | 0.1% | - | 0.10% | Loose | 0.0% |
| 3 | KCl+NaCl | 0.2% | - | 0.10% | Loose | 0.0% |
| 4 | KCl+NaCl | 0.4% | - | 0.10% | Loose | 0.0% |
| 5 | KCl+NaCl | 0.6% | - | 0.10% | Loose | 0.0% |
| 6 | KCl alone | 0% | - | 0.02% | Quasi-caked | 15.4% |
| 7 | NaCl alone | 0% | - | 0.15% | Loose | 0.0% |
| 8 | KCl+NaCl | 0% | Magnesium 0.4% carbonate | 0.08% | Loose | 0.0% |
| 9 | KCl+NaCl | 0% | Magnesium carbonate 0.8% | 0.08% | Loose | 0.0% |
| 10 | KCl+NaCl | 0% | Tricalcium phosphate 0.4% | 0.08% | Loose | 0.0% |
| 11 | KCl+NaCl | 0% | Tricalcium phosphate 0.8% | 0.08% | Loose | 0.0% |

[Table 6]

**Table 6**

| Sample No. | Salt | γ-PGA | Additive other than γ-PGA | Initial moisture | Caking properties due to absorption of moisture | | | | |
|---|---|---|---|---|---|---|---|---|---|
| | | | | | After 3 days | Amount of moisture absorbed after 3 days | After 7 days | Degree of caking | Amount of moisture absorbed after 7 days |
| 1 | KCl+ NaCl | 0% | - | 0.07% | Caked | 0.07% | Caked | 100.0% | 0.11% |
| 2 | KCl+ NaCl | 0.1% | - | 0.10% | Quasi-caked | 0.10% | Quasi-caked | 8.3% | 0.10% |
| 3 | KCl+ NaCl | 0.2 | - | 0.10% | Loose | 0.10% | Quasi-caked | 8.1% | 0.11% |
| 4 | KCl+ NaCl | 0.4% | - | 0.10% | Loose | 0.10% | Quasi-caked | 3.2% | 0.13% |
| 5 | KCl+ NaCl | 0.6% | - | 0.10% | Loose | 0.10% | Quasi-caked | 20.2% | 0.18% |
| 6 | KCl alone | 0% | - | 0.02% | Caked | 0.02% | Caked | 100.0% | 0.04% |
| 7 | NaCl alone | 0% | - | 0.15% | Loose | 0.15% | Loose | 0.0% | 0.16% |
| 8 | KC1+ NaCl | 0% | Magnesium carbonate 0.4% | 0.08% | Loose | 0.08% | Quasi-caked | 10.5% | 0.09% |
| 9 | KCl+ NaCl | 0% | Magnesium carbonate 0.8% | 0.08% | Loose | 0.09% | Loose | 0.0% | 0.09% |
| 10 | KCl+ NaCl | 0% | Tricalcium phosphate 0.4% | 0.08% | Loose | 0.09% | Quasi-caked | 17.2% | 0.11% |
| 11 | KCl+NaCl | 0% | Tricalcium phosphate 0.8% | 0.08% | Loose | 0.11% | Loose | 0.0% | 0.13% |

[Table 7]

**Table 7**

| Sample No. | Salt | γ-PGA | Initial moisture | Caking properties under load (after 7 days) | |
|---|---|---|---|---|---|
| | | | | State | Degree of caking |
| 12 | KCl+NaCl | 0.00% | 0.09% | Quasi-caked | 16.2% |
| 13 | KCl+NaCl | 0.05% | 0.08% | Quasi-caked | 9.2% |
| 14 | KCl+NaCl | 0.10% | 0.08% | Loose | 0.0% |
| 15 | KCl+NaCl | 0.20% | 0.08% | Loose | 0.0% |
| 16 | KCl+NaCl | 0.40% | 0.09% | Loose | 0.0% |
| 17 | KCl+NaCl | 0.60% | 0.10% | Loose | 0.0% |
| 18 | KCl+NaCl | 0.80% | 0.10% | Caked | 45.1% |
| 19 | KCl+NaCl | 1.00% | 0.12% | Caked | 55.2% |

[Table 8]

**Table 8**

| Sample No. | Salt | γ-PGA | Initial moistu re | Caking properties due to absorption of moisture | | | | |
|---|---|---|---|---|---|---|---|---|
| | | | | After 3 days | Amount of moisture absorbed after 3 days | After 7 days | Degree of caking | Amount of moisture absorbed after 7 days |
| 12 | KCl+NaCl | 0.00% | 0.09% | Caked | 0.09% | Caked | 100.0% | 0.12% |
| 13 | KCl+NaCl | 0.05% | 0.08% | Quasi-caked | 0.08% | Quasi-caked | 14.6% | 0.10% |
| 14 | KCl+NaCl | 0.10% | 0.08% | Quasi-caked | 0.08% | Quasi-caked | 9.2% | 0.09% |
| 15 | KCl+NaCl | 0.20% | 0.08% | Loose | 0.08% | Loose | 0.0% | 0.10% |
| 16 | KCl+NaCl | 0.40% | 0.09% | Loose | 0.09% | Loose | 0.0% | 0.10% |
| 17 | KCl+NaCl | 0.60% | 0.10% | Loose | 0.10% | Quasi-caked | 16.5% | 0.16% |
| 18 | KCl+NaCl | 0.80% | 0.10% | Quasi-caked | 0.17% | Caked | 41.3% | 0.25% |
| 19 | KCl+NaCl | 1.00% | 0.12% | Quasi-caked | 0.17% | Caked | 52.2% | 0.28% |

### (Example 5)

In this example, the caking properties when γ-PGA and another anti-caking substance were used in combination were evaluated.

### (Samples)

γ-PGA was added to commercial table salt so as to give 0.2 wt % and mixed. This was defined as sample No. 20.
A predetermined amount of magnesium carbonate or tricalcium phosphate was added to a mixture of NaCl:KCl:γ-PGA = 49.8:50:0.2, and mixed (sample Nos. 21 to 25).

### (Evaluation)

3 g of a sample was placed in a weighing bottle, and allowed to stand in an open state. Storage conditions were more severe than those for Example 4; a cycle of storage at 24.0°C and RH 65% for 17 hours and then storage at 24.0°C and RH 74% for 7 hours was repeated. Changes in state after one day and after three days were examined visually. The state after storage was classified as follows.
○ (Good): moved when the bottle was tilted.
△ (Fair): moved when the bottle was shaken.
x (Poor): moved when the bottle was tapped.
Evaluation results are shown in Table 9.

[Table 9]

**Table 9**

| Sample No. | Salt | γ-PGA (γ-PGA/(salt + γ-PGA) x 100) | Additive other than γ-PGA (proportion by weight relative to total of all components) | Initial moisture | State | |
|---|---|---|---|---|---|---|
| | | | | | After 1 day | After 3 days |
| 20 | Table salt (commercial product) | 0.20% | - | 0.03% | ○ to △ | x |
| 21 | KCl+NaCl | 0.20% | Magnesium carbonate 0.8% | 0.03% | ○ to △ | △ |
| 22 | KCl+NaCl | 0.20% | Magnesium carbonate 1.0% | 0.09% | ○ | ○ |
| 23 | KCl+NaCl | 0.20% | Tricalcium phosphate 0.8% | 0.05% | ○ | ○ |
| 24 | KCl+NaCl | 0.20% | Calcium carbonate 1.5% | 0.06% | ○ to △ | x |
| 25 | KCl+NaCl | 0.20% | Magnesium carbonate 0.4% + tricalcium phosphate 0.4% | 0.04% | ○ | △ |

From the examples above, in accordance with the use of γ-PGA, caking of a caking substance formed from a salt can be prevented effectively.
Furthermore, when the caking substance contains potassium chloride and sodium chloride at about the same ratio by weight, the anti-caking effect when using γ-PGA can be exhibited more stably.

## Claims

1. A taste improver for a taste-exhibiting substance formed from a potassium salt, the taste improver comprising poly-γ-glutamic acid or a salt thereof.

2. The taste improver as set forth in Claim 1, wherein said poly-γ-glutamic acid has a weight-average molecular weight of equal to or greater than 3 x 10³.

3. The taste improver as set forth in Claim 2, wherein said potassium salt is potassium chloride.

4. The taste improver as set forth in Claim 2, wherein said potassium salt is potassium glutamate.

5. A seasoning comprising the taste improver as set forth in any one of Claims 1 to 4 and a taste-exhibiting substance formed from a potassium salt.

6. The seasoning as set forth in Claim 5, wherein the proportion of said poly-γ-glutamic acid relative to said taste-exhibiting substance is equal to or greater than 0.0004 but not greater than 0.2 as a ratio by weight.

7. The seasoning as set forth in Claim 6, wherein it further comprises
sodium chloride, and
potassium chloride as said potassium salt.

8. The seasoning as set forth in Claim 5, wherein the proportion of said poly-γ-glutamic acid relative to said taste-exhibiting substance is equal to or greater than 0.0001 but not greater than 0.2 as a ratio by weight.

9. The seasoning as set forth in Claim 8, wherein it is in powder form or granular form.

10. The seasoning as set forth in Claim 9, wherein it comprises potassium glutamate as said potassium salt.

11. The seasoning as set forth in any one of Claims 5 to 10, wherein the proportion of said poly-γ-glutamic acid relative to the entirety of said seasoning is equal to or greater than 0.0002 wt % but not greater than 5 wt %.

12. Food or drink comprising the taste improver as set forth in any one of Claims 1 to 4, and a taste-exhibiting substance formed from a potassium salt.

13. The food or drink as set forth in Claim 12, wherein the proportion of said poly-γ-glutamic acid relative to the entirety of said food or drink is equal to or greater than 0.0002 wt % but not greater than 1 wt %.

14. A composition comprising poly-γ-glutamic acid or a salt thereof, a taste-exhibiting substance formed from a potassium salt, and sodium chloride,
said taste-exhibiting substance containing potassium chloride,
the proportion of said potassium chloride relative to the entire composition being equal to or greater than 40 wt % but not greater than 60 wt %, and
the proportion of said sodium chloride relative to the entire composition being equal to or greater than 40 wt % but not greater than 60 wt %.

15. The composition as set forth in Claim 14, wherein it comprises an umami material.

16. A method for improving the taste of a potassium salt, the method comprising making a taste-exhibiting substance containing a potassium salt and poly-γ-glutamic acid or a salt thereof be present at the same time.

17. The method for improving taste as set forth in Claim 16, wherein said poly-γ-glutamic acid has a weight-average molecular weight of equal to or greater than 3 x 10³.

18. The method for improving taste as set forth in Claim 16, wherein said poly-γ-glutamic acid or said salt thereof is added so as to be equal to or greater than 0.0004 but not greater than 0.2 as a ratio by weight relative to said taste-exhibiting substance.

19. The method for improving taste as set forth in Claim 17, wherein said taste-exhibiting substance contains potassium chloride.

20. The method for improving taste as set forth in Claim 17, wherein said poly-γ-glutamic acid or said salt thereof is added so as to be equal to or greater than 0.0001 but not greater than 0.2 as a ratio by weight relative to said taste-exhibiting substance.

21. The method for improving taste as set forth in Claim 20, wherein said taste-exhibiting substance contains potassium glutamate.
